# EUROPÄISCHE PATENTSCHRIFT

(11) **EP 0 750 100 B1**
(45) Veröffentlichungstag und Bekanntmachung des Hinweises auf die Patenterteilung: **02.02.2000**
(21) Anmeldenummer: 96108551.1
(22) Anmeldetag: 29.05.1996
(51) Int. Cl.: F01N 7/18, F16L 27/10

(54) **Flexibles Leitungselement für Abgasleitungen von Kraftfahrzeugen**
Flexible pipe component for exhaust gas conduits of vehicles
Elément de conduite flexible pour tuyaux d'échappement de véhicules

(30) Priorität: 21.06.1995 DE 19522463
(43) Veröffentlichungstag der Anmeldung: 27.12.1996
(73) Patentinhaber: Witzenmann GmbH Metallschlauch-Fabrik Pforzheim, D-75175 Pforzheim (DE)
(72) Erfinder: Elsässer, Fabian, D-75334Straubenhardt (DE); Wildermuth, Eberhard Dr., D-75181 Pforzheim (DE); Winzen, Wilfried Dr., D-75175Pforzheim (DE)
(74) Vertreter: Lemcke, Rupert, Dipl.-Ing.

(56) Entgegenhaltungen:
- EP-A- 0 519 636
- EP-A- 0 543 715
- DE-A- 2 710 598
- DE-A- 3 321 382
- DE-B- 1 047 529

## Beschreibung

Die Erfindung betrifft eine Vorrichtung zum flexiblen, schwingungsentkoppelten Verbinden von Leitungsteilen der Abgasanlage eines Verbrennungskraftmotors mit einer zumindest abschnittweise flexiblen Leitung und einem wenigstens einen flexiblen Abschnitt der Leitung zumindest teilweise mit gegenseitigem Abstand überbrückenden, mit seinen Enden mit der Leitung in Verbindung stehenden, tragenden und im wesentlichen parallel zur Leitung verlaufendem Stützelement, wobei die Vorrichtung durch zumindest ein separates Dämpfungselement schwingungsbedämpft ist.

Solche Vorrichtungen sind notwendig, da in einem Kraftfahrzeug der Motor elastisch aufgehängt ist, während die Abgasanlage relativ starr am Fahrzeug befestigt ist. Um die Relativbewegungen des Motors gegenüber der Abgasanlage zu ermöglichen, werden diese Vorrichtungen eingesetzt. Dabei tritt aber das Problem auf, daß im Hinblick auf eine optimale Schwingungsentkopplung die flexiblen Abschnitte der Leitung mit einer möglichst geringen Steifigkeit ausgeführt werden sollten. Dies wiederum zieht das Problem nach sich, daß die flexible Leitung in Eigenschwingungen geraten kann, was unerwünschte Schwingungen an der Karosserie und damit unerwünschten Körperschall zur Folge hat. Aus diesem Grund ist eine Dämpfung der eventuell auftretenden Eigenschwingungen der Vorrichtung notwendig. Außerdem erfordert diese geringe Steifigkeit ein Stützelement, das die Tragefunktion übernimmt.

Eine bekannte Vorrichtung hierzu ergibt sich aus der DE-OS 43 41 383, nach der das flexible Leitungsteil als ein gewelltes Metallrohr mit gewindeartigen Wellungen ausgebildet ist und das Stützelement durch eine in diese Wellungen hineingewickelte Stützwendel gebildet wird. Diese Stützwendel übernimmt dabei einerseits die Tragefunktion, während gleichzeitig die Bedämpfung des gewellten Rohres dadurch bewirkt wird, daß Stützwendel und gewelltes Rohr reibschlüssig miteinander verbunden sind.

Die reibschlüssige Verbindung hat aber den Nachteil, daß sie mit Verschleiß verbunden ist und somit nicht über die gesamte Lebensdauer der Vorrichtung sichergestellt werden kann. Außerdem ist wegen des Reibungsverschleißes, der durch eingebrachten Schmutz noch verstärkt werden kann, das gewellte Rohr in relativ dickem Material auszuführen, um diesem Verschleiß widerstehen zu können. Dadurch wird die Leitung aber wiederum unflexibel, was der gewünschten Schwingungsentkopplung entgegenwirkt.

Bei einer Vorrichtung der eingangs genannten Gattung nach der DE-OS 33 21 382 ist zwar ein Stützelement mit einem zwischengeschalteten Dämpfungselement bekannt, aber dieses vorbekannte Stützelement ist im übrigen starr ausgebildet. Damit ist die Flexibilität sehr stark eingeschränkt und es fehlt eine Möglichkeit, das Stützelement selbst so abzustimmen, daß eine Schwingungsübertragung weitgehend auszuschließen ist.

Aufgabe der Erfindung ist es daher, eine gattungsgemäße Vorrichtung derart weiterzubilden, daß sie die geforderte Dämpfung über die gesamte Lebensdauer sicherstellen kann, wobei die Schwingungsentkopplung und Beweglichkeit zwischen dem Verbrennungskraftmotor und der Abgasanlage weiter verbessert werden soll.

Diese Aufgabe ist erfindungsgemäß dadurch gelöst, daß das Stützelement wenigstens teilweise als Federdraht ausgebildet ist, teilweise um die Leitung herumgeführt ist und sowohl in Längsrichtung als auch quer dazu zumindest teilweise federnd ausgebildet ist.

Der Gegenstand der Erfindung hat den Vorteil, daß die einzelnen Funktionen, die in der Vorrichtung vereint werden sollen, jeweils durch separate Elemente übernommen werden: Die flexible Leitung übernimmt bei gleichzeitiger Bewegungs- und Schwingungsentkopplung die Gasführung, das Stützelement, das zumindest im mittleren Bereich im wesentlichen frei, d. h. ohne Kontakt mit der Leitung und zu dieser im wesentlichen parallel verläuft, übernimmt die eigentliche Tragfunktion und das separate Dämpfungselement hat nur die Dämpfungsfunktion zu erfüllen. Damit können die einzelnen Elemente bestmöglich auf ihre jeweilige Funktion abgestimmt werden, ohne Kompromisse machen zu müssen, wie sie bei der Erfüllung mehrerer Funktionen durch dasselbe Element in Kauf zu nehmen sind.

Dabei gewährleistet die federnde Ausbildung des Stützelementes, daß die Schwingungsentkopplung zwischen den beiden Enden der Vorrichtung verbessert wird, während durch eine entsprechende Abstimmung dieser Feder die Steifigkeit der Vorrichtung so verstimmt werden kann, daß es wenn überhaupt nur in unkritischen Frequenzbereichen zu Schwingungen kommt.

Das separate Dämpfungselement, das in seinen Dämpfungseigenschaften auf den jeweiligen Anwendungsfall abgestimmt werden kann, ermöglicht es weiterhin, die Bereiche kritischer Resonanzfrequenzen an der Vorrichtung zu vermeiden.

Das Stützelement und das Dämpfungselement können dabei parallel geführt werden. Dabei ist auch als "parallel" anzusehen, wenn das Dämpfungselement z.B. als Schwingungstilger direkt am Leitungselement befestigt wäre bzw. angreifen würde. Bei einer bevorzugten Ausführungsform, die den weiteren Ausführungen im wesentlichen zugrundeliegt, sind sie aber in Reihe geschaltet. Die schwingungsbedämpfende Funktion wirkt sich dabei direkt auf das Stützelement aus, und über dieses gleichzeitig auch auf die flexible Leitung.

Als weiterer Vorteil der federnden Ausbildung kann außerdem gesehen werden, daß durch das federnde Stützelement eine erheblich größere, insbesondere allseitige Beweglichkeit der erfindungsgemäßen Vorrichtung erreicht wird, was dazu ausgenutzt werden kann, den Motor weicher aufzuhängen. Dies bewirkt eine Komforterhöhung für die Fahrzeuginsassen, geht aber einher mit größeren Schwenkwinkeln des Motors. Diese können aber durch das erfindungsgemäße Bauteil noch relativ problemlos aufgenommen werden.

Unter dem Aspekt des zur Verfügung stehenden Bauraumes kann es notwendig sein, das Stützelement bei Reihenschaltung nur einseitig des Dämpfungselementes federnd auszubilden.

Um das erfindungsgemäße Stützelement aber besonders gut bedämpfen zu können, ist es vorteilhaft, wenn das Stützelement beidseitig des Dämpfungselementes federnd ausgebildet ist.

Hierbei kann durch eine entsprechende Abstimmung der jeweils zu dem Dämpfungselement hinführenden Stützelementabschnitte eine Dämpfungswirkung in mehreren Frequenzbereichen erwirkt werden. Dies kann beispielsweise auch dadurch erfolgen, daß mehrere Stützelemente über den Umfang der Vorrichtung verteilt werden. Diese sind auch jeweils unabhängig in ihrer Eigenfrequenz abstimmbar, so daß auch auf diese Weise eine Frequenzabstimmung der Vorrichtung in Anpassung an den konkreten Anwendungsfall erfolgen kann.

Dabei können die Dämpfungselemente auch asymmetrisch bezüglich mindestens einer der Hauptachsen des federnden Stützelementes angebracht sein. Dies heißt, daß das federnde Stützelement durch das Dämpfungselement in zwei unterschiedliche Teile aufgeteilt werden kann oder aber das Stützelement ist exzentrisch in bezug auf das Dämpfungselement, wodurch aufgrund der dadurch am Stützelement auftretenden Biegemomente dieses eine gewisse Vorspannung erhält.

Bei einer bevorzugten Ausführungsform ist das Dämpfungselement als ein Elastomerteil oder als Gummi-Metall-Element ausgebildet. Diese sind von ihrem Schwingungs- und Dämpfungsverhalten her gut kontrollierbar und eignen sich deswegen besonders für diesen Zweck.

Es ist andererseits natürlich auch möglich, andere Dämpfungselemente zu verwenden, beispielsweise hydraulische Dämpfer (die je nach Aufwand, den man zu treiben bereit ist, auch elektronisch geregelt sein können) oder es handelt sich um einen Massedämpfer (Tilger). Auch Drahtpreßkissen sind denkbar, wobei diese aber sich mit der Lebensdauer verändernde Dämpfungseigenschaften haben, was ihre Verwendbarkeit einschränkt.

Das Material der federnden Stützelemente kann sowohl einen runden als auch einen ovalen, einen polygonalen, hier insbesondere rechteckigen Querschnitt haben. Insbesondere mit ovalem oder polygonalem Querschnitt können die Federeigenschaften des Stützelementes in verschiedene Richtungen unterschiedlich ausgebildet werden. Damit kann das Stützelement vorteilhaft auf aus unterschiedlichen Richtungen auf die Vorrichtung wirkende Schwingungen abgestimmt werden.

Da das Stützelement als wesentliche Aufgabe hat, insbesondere die flexiblen Abschnitte der Leitung vor einer ungewollten Längung zu bewahren, wird es vorzugsweise in Endbereichen der flexiblen Leitungen mit ihnen verbunden. So kann gleichzeitig ein ungewünschtes Ausknicken der flexiblen Leitung verhindert werden.

Die Verbindung kann dabei sowohl im schon starren Anschlußbereich der flexiblen Leitung erfolgen, die als Stutzen oder Flansch ausgebildet ist, sie kann aber auch in dem Bereich erfolgen, wo die Leitung in ihrem eigentlichen flexiblen Abschnitt übergeht.

Bei der Befestigung des Stützelementes auf dem starren Stutzenbereich kann es soweit an der Kante des Stutzens sitzen, daß es bei einem Anschweißen des Stutzens an das angrenzende Leitungsteil direkt mit dem Stutzen verschweißt wird.

Bei der Verwendung eines Wellschlauches für die flexiblen Abschnitte der Leitung ist es möglich, das Stützelement zwischen zwei Wellen im Endbereich des Wellschlauches form- und/oder kraftschlüssig festzulegen. Diese Wellen, die im Bereich angeordnet sind, in dem der Wellschlauch in seinen flexiblen Bereich übergeht, können einschließlich des dazwischen liegenden Wellentales steifer ausgebildet sein, um so eine bessere Verbindung von Stützelement und Leitung zu ermöglichen. In besonderen Anwendungsfällen wird das Stützelement so ausgestaltet, daß es sich an mehr als nur zwei Wellen abstützt, wodurch dort der Bereich der Krafteinleitung vergrößert wird, womit sich gleichzeitig die spezifische Belastung des Wellschlauches verringert.

Obwohl es üblicherweise ausreichen wird, das Stützelement nur an den Enden mit der flexiblen Leitung zu verbinden, was ja insbesondere für die Stützfunktion notwendig ist, kann es aber auch zwischen den Endbereichen noch einmal zusätzlich an die Leitung angekoppelt sein. Dies kann dadurch realisiert werden, daß das Stützelement in seinem Verlauf die flexible Leitung noch einmal umschlingt oder aber indem ein Koppelglied an der flexiblen Leitung befestigt wird, das dann beispielsweise auch bei mit dem Stützelement in Reihe geschaltetem Dämpfungselement direkt mit dem Dämpfungselement verbunden werden kann.

Dabei soll hier noch bemerkt werden, daß in bezug auf die auch von der Erfindung erfaßten parallelen Anordnung von Stützelement und Dämpfer die bisher zur Befestigung des Stützelementes gemachten Ausführungen in gleicher Weise für die Befestigung des separaten, parallel geschalteten Dämpfungselementes gelten. Um die Federeigenschaft des Stützelementes auf den speziellen Anwendungsfall abzustimmen, muß es nicht auf kürzestem Weg zwischen seinen Befestigungstellen geführt sein, sondern ein beliebiger meanderförmiger oder geschwungener Weg ist möglich. Um dabei den Gesamtbauraum der erfindungsgemäßen Vorrichtung nicht übermäßig zu erweitern, wird das Stützelement dann bevorzugterweise zumindest abschnittweise mit Abstand spiral- und/oder wendelförmig um die flexible Leitung herumgeführt.

Da unter dem Aspekt des möglichst geringen Bauraumes das Dämpfungselement auch sehr nah an der abgasführenden Leitung zu liegen kommen kann, ist es vorteilhafterweise mit einer zur abgasführenden Leitung gerichteten Abschirmung versehen, durch die es vor zu starker Hitzeeinwirkung geschützt wird.

Bei längeren Abgasleitungen können Abschnitte des Stützelementes schalenförmig ausgebildet sein, um mit der Leitung für das Abgas ein luftspaltisoliertes Vorrohr zu bilden.

Weitere Vorteile der Erfindung ergeben sich aus der nachfolgenden Beschreibung von Ausführungsbeispielen. Dabei zeigt
- Figur 1: erfindungsgemäße Vorrichtung mit zwei parallel geschalteten Stützelementen;
- Figur 2: Vorrichtung mit um die flexible Leitung herumgeführtem Stützelement aus Runddraht in der Seitenansicht;
- Figur 3: Vorrichtung gemäß Figur 2 in der Aufsicht;
- Figur 4: Vorrichtung mit um die flexible Leitung herumgeführtem blattfederartigen Stützelement in der Seitenansicht;
- Figur 5: Vorrichtung gemäß Figur 4 in der Aufsicht;
- Figur 6: Vorrichtung mit mehreren flexiblen Abschnitten und dazwischen liegenden starren Abschnitten;
- Figur 7: erfindungsgemäße Vorrichtung an einem zweiwandigen Vorrohr.

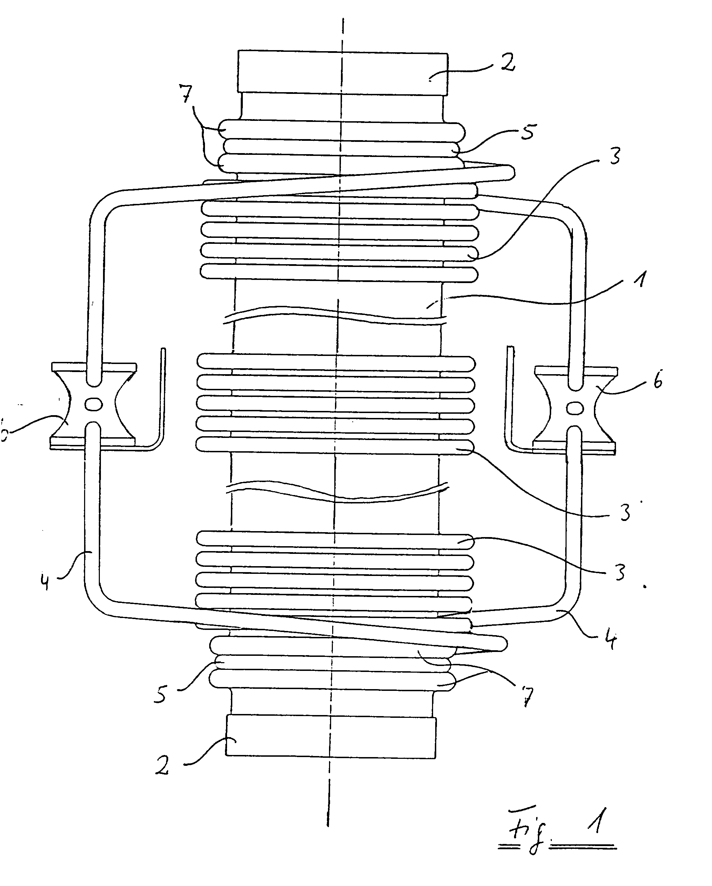

In der Figur 1 erkennt man eine erfindungsgemäße Vorrichtung mit der der Abgasaustritt eines Verbrennungskraftmotors und eine Abgasanlage eines Kraftfahrzeugs flexibel verbunden werden. Die Abgase werden dabei durch eine gasdichte Leitung 1 geleitet, die im hier dargestellten Beispiel durch ein Metallwellrohr gebildet wird. Dieses weist an seinen Enden Endhülsen 2 auf, über die das Wellrohr an den hier nicht dargestellten Anschlußteilen befestigt wird.

Der zwischen den Endhülsen 2 liegende Bereich ist in bekannter Weise durch Bildung von Wellen 3 flexibel ausgebildet, wobei im hier dargestellten Beispiel sich zwischen den durch Wellen 3 flexibel ausgebildeten Bereichen ungewellte und damit starre Abschnitte befinden. Aufgrund der flexiblen Abschnitte ist das Wellrohr aber nicht in der Lage, axiale Kräfte aufzunehmen. Für diese Aufgabe werden deswegen Stützelemente 4 vorgesehen, die mit ihren Enden 5 an der Leitung festgelegt sind. Diese Stützelemente 4 halten die Endbereiche der gasdichten Leitung 1 in vorgegebenem Abstand, so daß die dazwischenliegende Leitung 1 in ihrer Eigenbewegung nicht eingeschränkt ist.

Bei diesen Eigenbewegungen handelt es sich zum Teil um Schwingungen, die durch das die Leitung durchströmende Abgas bewirkt werden, oder aber um Schwingungen, die von dem Verbrennungskraftmotor aufgeprägt werden. Um diese Schwingungen zu bedämpfen, sind die Stützelemente 4 mit zwischengeschalteten Dämpfungselementen 6 versehen, wobei es sich im hier dargestellten Beispiel bei diesen Dämpfungselementen um Gummi-Metall-Elemente handelt. Die Verbindung zwischen den Stützelementen 4 und den Dämpfungselementen 6 kann durch Einstecken der den Dämpfungselementen 6 zugewandten Enden der Stützelemente 4 erfolgen oder aber durch ein Anvulkanisieren.

In diesen Gummi-Metall-Elementen werden die Schwingungen abgebaut, die in den Stützelementen 4 aufgrund von deren Ankopplung an die Leitung 1 vorhanden sind. Die Stützelemente 4 sind dabei federnd ausgebildet, um die in den Enden 5 in das Stützelement 4 eingeleiteten Schwingungen nur abgeschwächt am Dämpfungselement 6 ankommen zu lassen.

Durch die Länge der Stützelemente 4 kann dabei deren Federsteifigkeit eingestellt werden, so daß durch ein spiralförmiges Herumführen des Stützelementes 4 um die Leitung 1 die Federsteifigkeit entsprechend verändert, das heißt in diesem Fall verringert wird. Durch Verwendung von wie hier dargestellt zwei parallel zueinander verlaufenden Stützelementen kann hier eine noch feinere Abstimmung der Federeigenschaften erfolgen. Außerdem ist mit einer derartigen Anordnung von zwei gleichartigen, sich am Umfang gegenüberliegenden Stützelementen 4 eine symmetrische Abstützung möglich, wodurch eine Gefahr des Ausknickens der Leitung 1 weiter verringert wird.

Die Enden 5 der Stützelemente 4 sind in dem in der Figur 1 dargestellten Beispiel ösenförmig ausgebildet und zwischen zwei Wellen 7 des Wellschlauches eingespannt. Diese Wellen 7 und das zwischen ihnen liegende Tal sind jeweils steifer ausgebildet als die übrigen Wellen 3 des Wellschlauches, so daß sie auf sie wirkenden Axialkräfte besser aufnehmen können. Die steifere Ausbildung kann entweder durch dickere oder mehrere Materiallagen erreichbar sein oder wie im hier dargestellten Beispiel durch eine weniger tief und damit steifere Wellung.

Die an diesen steiferen Wellen angebundenen Stützelemente 4 leiten die Axialkräfte aus der Leitung heraus und um den Bereich der weicheren Wellen 3 herum, wodurch diese keiner ungewollten Längung ausgesetzt werden.

Da die Stützelemente 4, die im hier dargestellten Beispiel aus rundem Federdraht bestehen, aufgrund ihrer eigenen federnden Eigenschaften eine Eigenfrequenz haben, wird durch entsprechende Weichheit dieser Feder sichergestellt, daß die Eigenfrequenz dieser Federn so liegt, daß das Gesamtsystem immer eine möglichst gute Schwingungsdämpfung hat. Indem die Dämpfungselemente 6 dabei nicht genau mittig zwischen den Endbereichen 5 am Stützelement 4 angeordnet sind sondern zu einem der Enden hin versetzt sind, bilden sich zwei unterschiedlich lange federnde Stützelemententeile, die jeweils unterschiedliche Federeigenschaften haben und somit eine weitere Eigenfrequenzverstimmung des Gesamtsystems ermöglichen. Dies ist eine weitere Möglichkeit Eigenschwingungen effektiv zu unterbinden.

Wie schon erwähnt, hat die Länge des Stützelementes 4 auf dessen Weichheit und damit dessen Eigenfrequenz einen wesentlichen Einfluß. Es soll dabei aber auch erwähnt werden, daß auch die Möglichkeit besteht, das Stützelement auf dem kürzesten Weg zwischen den Endbereichen der Vorrichtung zu führen.

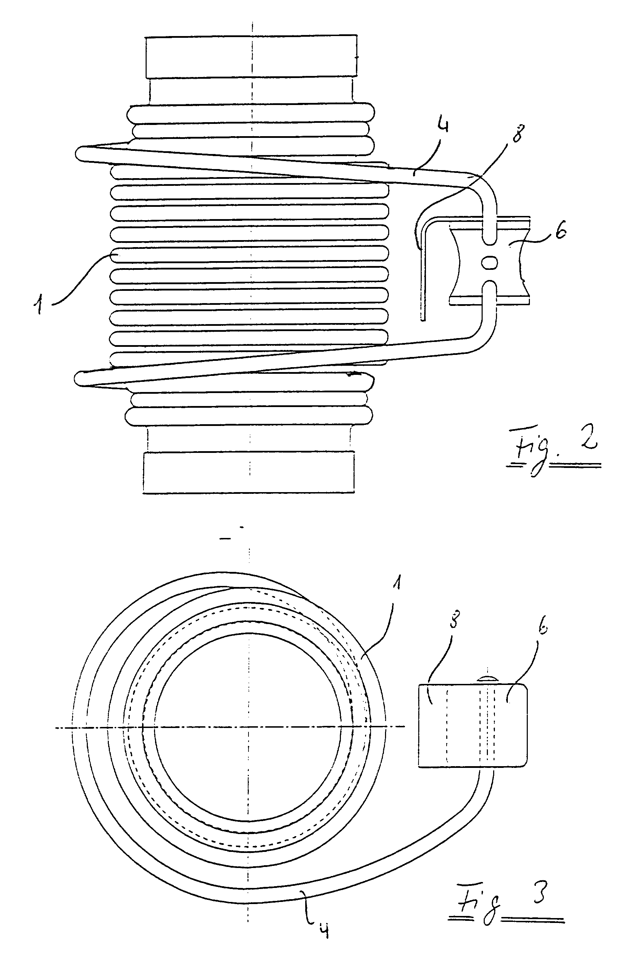

Im Gegensatz zur Ausführung gemäß Figur 1 ist in der Figur 2 nur ein Stützelement vorhanden, wodurch sich der Bauraum für die Gesamtvorrichtung noch etwas verringert, allerdings auch der Angriff der Abstützung exzentrisch zur Abgasleitung 1 ist. Damit sich der Bauraum für die Gesamtvorrichtung nicht unverhältnismäßig stark vergrößert, ist bei den Ausführungsformen gemäß Figur 1 und bei Figur 2 das Stützelement 4 spiral- und wendelförmig um das als gasdichte Leitung 1 fungierende Wellrohr herumgeführt. Dies ist in der Figur 3 für die Ausführungsform gemäß Figur 2 in der Aufsicht zu erkennen. Dabei wird aber auch das als Dämpfungselement 6 fungierende Gummi-Metall-Element in die Nähe der Leitung 1 gebracht, die aufgrund der durchströmenden heißen Abgase selber auch sehr warm ist. Das Dämpfungselement 6 weist deswegen eine Abschirmung in Form eines Abschirmbleches 8 auf, mit dem das Gummi-Metall-Element vor dieser von dem Wellrohr abgestrahlten Hitze geschützt wird.

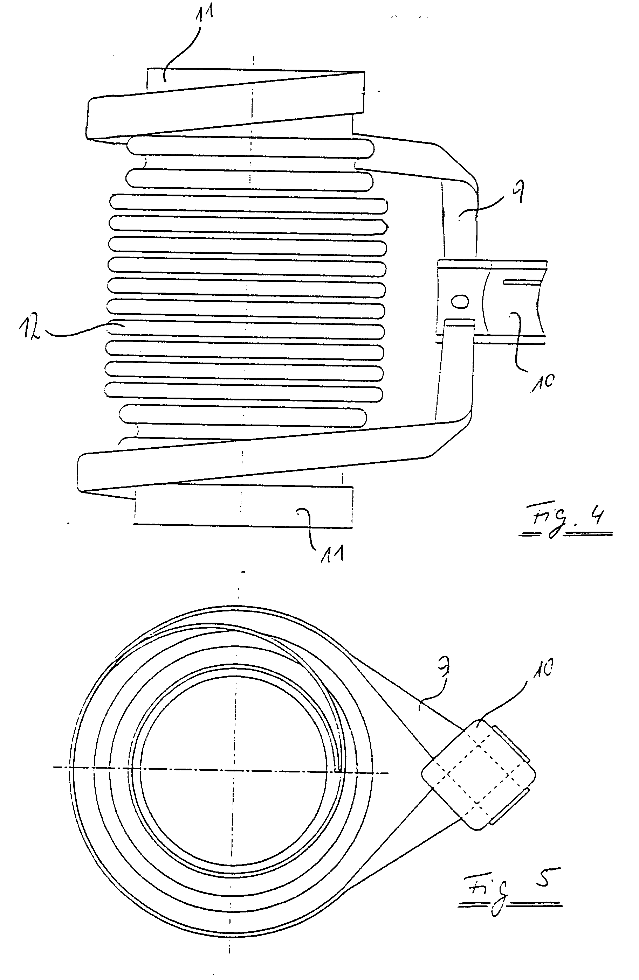

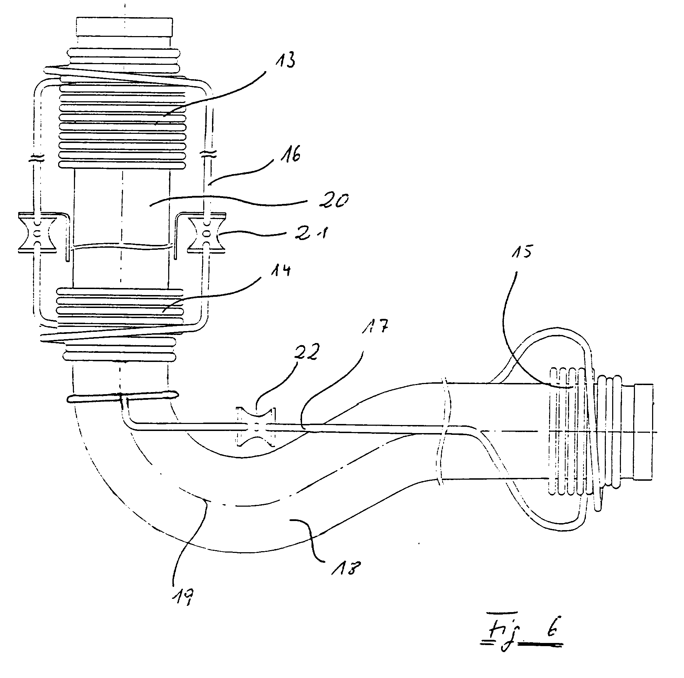

Eine weitere Ausführungsform der erfindungsgemäßen Vorrichtung ist in Figur 4 in der Seitenansicht und in der Figur 5 in der Aufsicht dargestellt. Bei dieser Abwandlung wird anstelle eines runden Federdrahtes, wie er bisher beschrieben wurde, ein Stützelement 9 aus flachem Federmaterial verwendet. Wie in der Figur 5 zu erkennen ist, sind die beiden Stützelementteile in dem Dämpfungselement 10 kreuzweise geführt, wodurch dessen Dämpfungseigenschaften in besonders guter Weise genutzt werden können. Außerdem liegt bei dem hier dargestellten Ausführungsbeispiel das Dämpfungselement 10 mit seinem Schwerpunkt nicht auf der Mittellinie des Stützelementes 9, sondern ist seitlich versetzt. Damit treten in den Stützelementen 9 gewisse Biegemomente auf, die eine vorteilhafte vorspannung in diesen bewirken.

Durch Verwendung eines Flachmaterials für das Stützelement 9 hat dieses unterschiedliche Steifigkeiten in verschiedene Richtungen, was für eine Anpassung der Federeigenschaften des Stützelementes in verschiedene Richtungen vorteilhaft ist.

Das Stützelement 9 ist mit seinen Enden 11 nicht auf dem noch mit Wellen versehenen Bereich des Wellrohres 12 befestigt, sondern auf dessen Endhülsen. Dadurch kann erreicht werden, daß bei einem Anschweißen des Wellrohres 12 an die angrenzenden Bauteile die Schweißnaht so gelegt werden kann, daß die Enden 11 des Stützelementes 9 gleichzeitig mit an dem Wellrohr angeschweißt werden.

Während in den bisher beschriebenen Ausführungsbeispielen jeweils nur relativ kurze Abgasleitungen dargestellt wurden, wird in Figur 6 eine mit mehreren flexiblen Abschnitten 13, 14, 15 versehene Leitung dargestellt. Die in dieser Figur zu sehenden Stützelemente 16, 17 sind dabei einerseits, wie oben beschrieben, im Endbereich der von ihnen überbrückten flexiblen Abschnitte 13, 14 (Stützelement 16), 15 (Stützelement 17) festgelegt. Am anderen Ende sind sie dann aber entweder an einem weiteren flexiblen Abschnitt der Leitung 14, 13 (beim Stützelement 16) befestigt oder an einem starren Bereich der Leitung 18, der sich an den flexiblen Abschnitt 15 anschließt.

Der in Figur 6 dargestellte, sich an den flexiblen Abschnitt 15 anschließende starre Abschnitt 18 ist dabei durch nachträgliches Strecken eines Wellrohres entstanden, weswegen er eine hier nicht näher gezeigte, flachere und damit steifere Wellung hat.
Das Stützelement 17 verläuft dabei in einer bezogen auf Biegungen der Abgasleitungen neutralen Ebene 19, wobei parallel ein nicht dargestelltes weiteres Stützelement 17 auf der anderen Seite der Abgasleitung verläuft.

Das Stützelement 16 ist mit seinen Enden an zwei verschiedenen flexiblen Abschnitten 13, 14 der dargestellten längeren Abgasleitung festgelegt, wobei die beiden flexiblen Abschnitte 13, 14 wiederum durch einen steiferen Abschnitt 20 verbunden sind.

Die von der Abgasleitung auf die federnden Stützelemente 16, 17 geleiteten Schwingungen werden in diesen jeweils durch Dämpfungselemente 21, 22 abgebaut.

Da die Dämpfungselemente nicht mittig an den Stützelementen 16, 17 befestigt sind, werden durch die unterschiedlichen Längen der sich zwischen der Festlegung der Stützelemente 16, 17 und deren Ankopplung an die Dämpfungselemente 21, 22 ergebende federnde Abschnitte unterschiedliche Dämpfungseigenschaften erreicht.

In diesem Zusammenhang muß noch erwähnt werden, daß als Dämpfungselement außer Gummi-Metall-Elementen auch gegebenenfalls ein Massendämpfer (Tilger) oder ein hydraulisches Dämpfungselement einsetzbar ist. Aber auch die Verwendung von Drahtpreßkissen ist möglich.

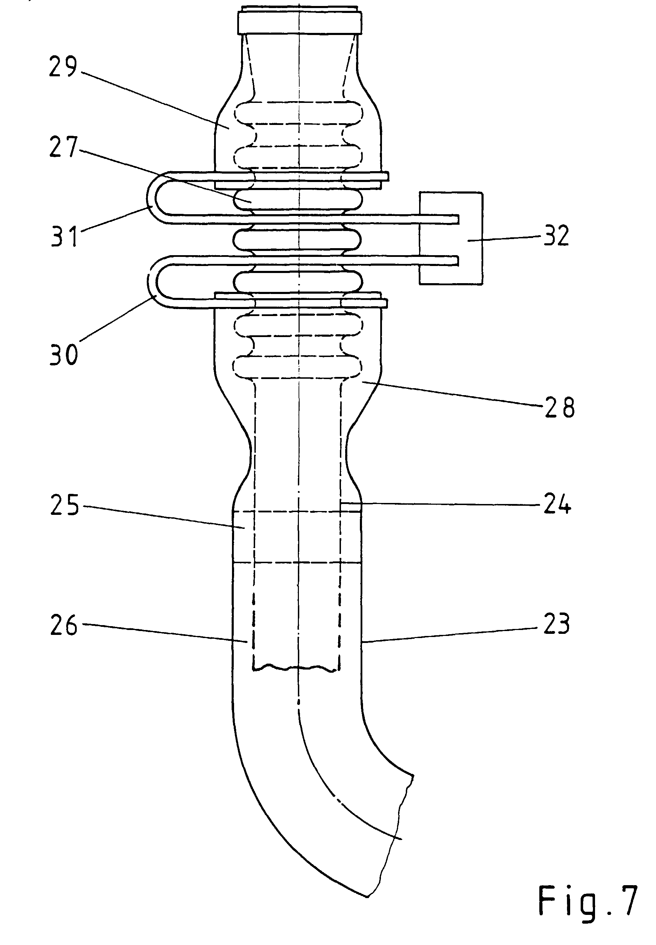

Ein derart langes Abgaselement, wie es in der Figur 6 dargestellt ist, hat den Nachteil, daß die Abgase in ihm relativ stark abkühlen. Dies ist unerwünscht, da bei den heute verwendeten Katalysatoren die Abgase eine möglichst hohe Temperatur haben sollen. Damit dies ermöglicht wird, ist wie in der Figur 7 dargestellt das Stützelement teilweise schalenartig als Außenrohr 23 eines luftspaltisolierten Vorrohres ausgebildet. Bei diesem Vorrohr ist die eigentliche Abgasleitung 24 in bekannter Weise durch Abstandhalter 25 zentrisch im Außenrohr 23 gelagert. Dadurch ergibt sich ein um die Abgasleitung 24 herumlaufender Spalt 26, der die Abgasleitung wärmeisoliert.

Um die gewünschte gelenkige Verbindung zu erreichen, weist die Abgasleitung 24 einen als Wellschlauch 27 ausgebildeten Abschnitt auf, wobei in diesem Bereich das Außenrohr 23 als zwei den Enden des Wellschlauches 27 zugeordnete Glockenabschnitte 28, 29 ausgebildet ist. Diese Glockenabschnitte 28, 29 sind aufeinander zu gerichtet, wobei sie mit ihren offenen Enden einander mit Abstand gegenüberliegen. Diese beiden Glockenabschnitte 28, 29 tragen an ihren offenen Enden jeweils spiralförmig umlaufende federnde Elemente 30, 31, die durch ein Dämpfungselement 32 miteinander verbunden sind. Die federnden Elemente 30, 31 können wie hier dargestellt separat auf den Glockenabschnitten befestigt sein oder aber einstückig aus diesen herausgeschnitten werden.

Durch die federnden Elemente 30, 31 werden auf den Wellschlauch 27 wirkende Axialkräfte aufgenommen und dabei auftretende Schwingungen durch das Dämpfungselement 32 gedämpft.

Zusammenfassend weist die vorliegende Erfindung die Möglichkeit auf, bei einer Vorrichtung zum gelenkigen Verbinden durch genaue Abstimmung mehrerer Federn und Dämpfer, die durch die flexible Leitung, das Stützelement und das Dämpfungselement gebildet werden, ein im Einsatz besonders gut schwingungsdämpfendes Abgasleitungsteil zu erreichen.

## Patentansprüche

1. Vorrichtung zum flexiblen, schwingungsentkoppelten Verbinden von Leitungsteilen der Abgasanlage eines Verbrennungskraftmotors, mit einer zumindest abschnittweise flexiblen Leitung (1, 12, 13, 14, 15, 18, 20, 24, 27) für das Abgas und einem wenigstens einen flexiblen Abschnitt (3, 12, 13, 14, 15) der Leitung zumindest teilweise mit gegenseitigem Abstand überbrückenden, mit seinen Enden mit der Leitung in Verbindung stehenden, tragenden und im wesentlichen parallel zur Leitung verlaufenden Stützelement (4, 9, 16, 17, 23, 30, 31), wobei die Vorrichtung durch zumindest ein separates Dämpfungselement (6, 10, 21, 22, 32) schwingungsbedämpft ist,
dadurch gekennzeichnet,
daß das Stützelement (4, 9, 16, 17, 23, 30, 31) wenigstens teilweise als Federdraht ausgebildet ist, teilweise um die Leitung herumgeführt ist und sowohl in Längsrichtung als auch quer dazu zumindest teilweise federnd ausgebildet ist.

2. Vorrichtung nach Anspruch 1,
dadurch gekennzeichnet,
daß das Dämpfungselement dem Stützelement parallel geschaltet ist.

3. Vorrichtung nach Anspruch 1,
dadurch gekennzeichnet,
daß das Dämpfungselement (6, 10, 21, 22, 32) mit dem Stützelement (4, 9, 16, 17, 23) in Reihe geschaltet ist.

4. Vorrichtung nach Anspruch 3,
dadurch gekennzeichnet,
daß das Stützelement (4, 9, 16, 17, 23) beidseitig des Dämpfungselementes (6, 10, 21, 22, 32) federnd ausgebildet ist.

5. Vorrichtung nach Anspruch 3,
dadurch gekennzeichnet,
daß das Stützelement einseitig des Dämpfungselementes federnd ausgebildet ist.

6. Vorrichtung nach einem der Ansprüche 1 bis 5,
dadurch gekennzeichnet,
daß über den Umfang der Vorrichtung mehrere Stützelemente (4, 16, 17) und/oder Dämpfungselemente (6, 21, 22) verteilt sind.

7. Vorrichtung nach Anspruch 2,
dadurch gekennzeichnet,
daß das Dämpfungselement (10, 21, 22) asymmetrisch bezüglich mindestens einer der Hauptachsen des federnden Stützelementes (9, 16, 17) ist.

8. Vorrichtung nach einem der Ansprüche 1 bis 7,
dadurch gekennzeichnet,
daß das Dämpfungselement ein Elastomerteil oder ein Gummi-Metall-Element (6, 10, 21, 22, 32) ist.

9. Vorrichtung nach einem der Ansprüche 1 bis 7,
dadurch gekennzeichnet,
daß das Dämpfungselement als Tilgerelement ausgebildet ist.

10. Vorrichtung nach einem der Ansprüche 1 bis 9,
dadurch gekennzeichnet,
daß das Dämpfungselement form- und/oder kraftschlüssig mit dem Stützelement verbunden ist.

11. Vorrichtung nach einem der Ansprüche 1 bis 10,
dadurch gekennzeichnet,
daß das Stützelement (4, 16, 17) aus Material mit rundem oder ovalem Querschnitt besteht.

12. Vorrichtung nach einem der Ansprüche 1 bis 10,
dadurch gekennzeichnet,
daß das Stützelement (9, 30, 31) aus Material mit polygonalem Querschnitt, insbesondere aus rechteckigem Flachmaterial besteht.

13. Vorrichtung nach einem der Ansprüche 1 bis 12,
dadurch gekennzeichnet,
daß das Stützelement (4, 9, 16, 17) mit der flexiblen Leitung in Endbereichen von flexiblen Abschnitten der Leitung (1, 12, 13, 14, 15) verbunden ist.

14. Vorrichtung nach Anspruch 13,
dadurch gekennzeichnet,
daß die ein oder mehreren flexiblen Abschnitte der Leitung (1, 12, 13, 14, 15), mit deren Endbereiche das Stützelement verbunden ist, aus einem Metallwellschlauch (1) besteht und das Stützelement (4) in dessen Endbereichen zwischen wenigstens zwei Wellen (7) durch Form- und/oder Kraftschluß festgelegt ist.

15. Vorrichtung nach Anspruch 14,
dadurch gekennzeichnet,
daß die zwei Wellen (7) steifer ausgebildet sind als die restlichen Wellen (3) des Wellschlauches.

16. Vorrichtung nach einem der Ansprüche 1 bis 15,
dadurch gekennzeichnet,
daß das Stützelement zwischen den Endbereichen der Leitung zusätzlich an diese angekoppelt ist.

17. Vorrichtung nach einem der Ansprüche 1 bis 16,
dadurch gekennzeichnet,
daß das Stützelement (4, 9, 30, 31) zumindest abschnittweise mit Abstand spiral- und/oder wendelförmig um die flexible Leitung (1, 12, 27) herumgeführt ist.

18. Vorrichtung nach einem der Ansprüche 1 bis 17,
dadurch gekennzeichnet,
daß das Dämpfungselement (6) eine zur abgasführenden Leitung (1) gerichtete Abschirmung (8) aufweist.

19. Vorrichtung nach einem der Ansprüche 1 bis 18,
dadurch gekennzeichnet,
daß ein Abschnitt des Stützelementes (23) schalenförmig ausgebildet ist und zusammen mit der Leitung (24) für das Abgas ein luftspaltisoliertes Vorrohr bildet.

20. Vorrichtung nach einem der Ansprüche 1 bis 19,
dadurch gekennzeichnet,
daß die ein oder mehreren flexiblen Leitungsabschnitte ein ringförmig oder schraubengangförmig gewellter Metallschlauch bzw. -balg oder ein dicht gewickelter Metallschlauch sind.

## Claims

1. Device for the flexible, vibration-decoupled connection of conduit parts of the exhaust-gas system of an internal combustion engine, with a conduit (1, 12, 13, 14, 15, 18, 20, 24, 27) for the exhaust gas which is flexible at least in sections and a load-bearing support element (4, 9, 16, 17, 23, 30, 31) which bridges at least one flexible section (3, 12, 13, 14, 15) of the conduit at least partly with a mutual spacing, is connected by its ends to the conduit and extends substantially parallel to the conduit, wherein the device is vibration-damped by at least one separate damping element (6, 10, 21, 22, 32),
characterised in that the support element (4, 9, 16, 17, 23, 30, 31) is formed at least partly as spring wire, is wound partly around the conduit and is at least partly resilient both in the longitudinal direction and transversely thereto.

2. Device according to claim 1,
characterised in that the damping element is connected in parallel with the support element.

3. Device according to claim 1,
characterised in that the damping element (6, 10, 21, 22, 32) is connected in series with the support element (4, 9, 16, 17, 23).

4. Device according to claim 3,
characterised in that the support element (4, 9, 16, 17, 23) is formed so as to be resilient on both sides of the damping element (6, 10, 21, 22, 32).

5. Device according to claim 3,
characterised in that the support element is formed so as to be resilient on one side of the damping element.

6. Device according to any one of claims 1 to 5,
characterised in that a plurality of support elements (4, 16, 17) and/or damping elements (6, 21, 22) are distributed over the circumference of the device.

7. Device according to claim 2,
characterised in that the damping element (10, 21, 22) is asymmetrical in relation to at least one of the principal axes of the resilient support element (9, 16, 17).

8. Device according to any one of claims 1 to 7,
characterised in that the damping element is an elastomer part or a rubber-metal element (6, 10, 21, 22, 32).

9. Device according to any one of claims 1 to 7,
characterised in that the damping element is formed as an absorber element.

10. Device according to any one of claims 1 to 9,
characterised in that the damping element is connected to the support element in mating and/or frictional fashion.

11. Device according to any one of claims 1 to 10,
characterised in that the support element (4, 16, 17) consists of material with a round or an oval cross section.

12. Device according to any one of claims 1 to 10,
characterised in that the support element (9, 30, 31) consists of material with a polygonal cross section, in particular of rectangular flat material.

13. Device according to any one of claims 1 to 12,
characterised in that the support element (4, 9, 16, 17) is connected to the flexible conduit in end regions of flexible sections of the conduit (1, 12, 13, 14, 15).

14. Device according to claim 13,
characterised in that the one or more flexible section(s) of the conduit (1, 12, 13, 14, 15) to whose end regions the support element is connected consist(s) of a corrugated metal hose (1), and the support element (4) is secured in the end regions thereof between at least two corrugations (7) through a mating and/or frictional engagement.

15. Device according to claim 14,
characterised in that the two corrugations (7) are more rigid than the remaining corrugations (3) of the corrugated hose.

16. Device according to any one of claims 1 to 15,
characterised in that the support element is additionally coupled to the conduit between its end regions.

17. Device according to any one of claims 1 to 16,
characterised in that the support element (4, 9, 30, 31) is wound spirally and/or helically around the flexible conduit (1, 12, 27) at least in sections with a spacing.

18. Device according to any one of claims 1 to 17,
characterised in that the damping element (6) comprises a shield (8) which is directed towards the exhaust gas-carrying conduit (1).

19. Device according to any one of claims 1 to 18,
characterised in that a section of the support element (23) is shell-shaped and, together with the conduit (24) for the exhaust gas, forms an air gap-isolating front pipe.

20. Device according to any one of claims 1 to 19,
characterised in that the one or more flexible conduit section(s) is/are a metal hose or bellows corrugated in annular or screw-thread fashion or a tightly wound metal hose.

## Revendications

1. Dispositif pour le raccordement flexible, avec découplage vibratoire, d'éléments de conduites du système d'échappement d'un moteur à combustion interne, comprenant une conduite (1, 12, 13, 14, 15, 18, 20, 24, 27) flexible au moins par zones, destinée aux gaz d'échappement, et un élément d'appui (4, 9, 16, 17, 23, 30, 31) à effet de support, qui s'étend pour l'essentiel parallèlement à la conduite, est en liaison avec ladite conduite par ses extrémités, et ceinture au moins un segment flexible (3, 12, 13, 14, 15) de ladite conduite, au moins partiellement avec espacement mutuel, l'amortissement vibratoire du dispositif étant assuré par au moins un élément amortisseur distinct (6, 10, 21, 22, 32),
caractérisé par le fait
que l'élément d'appui (4, 9, 16, 17, 23, 30, 31) est réalisé au moins partiellement sous la forme d'un fil métallique à ressorts, contourne au moins partiellement la conduite et est au moins partiellement doué d'élasticité, tant dans la direction longitudinale que transversalement par rapport à cette dernière.

2. Dispositif selon la revendication 1,
caractérisé par le fait
que l'élément amortisseur est monté parallèlement à l'élément d'appui.

3. Dispositif selon la revendication 1,
caractérisé par le fait
que l'élément amortisseur (6, 10, 21, 22, 32) est monté en série avec l'élément d'appui (4, 9, 16, 17, 23).

4. Dispositif selon la revendication 3,
caractérisé par le fait
que l'élément d'appui (4, 9, 16, 17, 23) est doué d'élasticité de part et d'autre de l'élément amortisseur (6, 10, 21, 22, 32).

5. Dispositif selon la revendication 3,
caractérisé par le fait
que l'élément d'appui est doué d'élasticité sur un côté de l'élément amortisseur.

6. Dispositif selon l'une des revendications 1 à 5,
caractérisé par le fait
que plusieurs éléments d'appui (4, 16, 17) et/ou éléments amortisseurs (6, 21, 22) sont répartis sur le pourtour dudit dispositif.

7. Dispositif selon la revendication 2,
caractérisé par le fait
que l'élément amortisseur (10, 21, 22) est asymétrique par rapport à au moins l'un des axes principaux de l'élément élastique d'appui (9, 16, 17).

8. Dispositif selon l'une des revendications 1 à 7,
caractérisé par le fait
que l'élément amortisseur est une pièce en élastomère ou un élément (6, 10, 21, 22, 32) du type caoutchouc-métal.

9. Dispositif selon l'une des revendications 1 à 7,
caractérisé par le fait
que l'élément amortisseur est réalisé sous la forme d'un élément compensateur.

10. Dispositif selon l'une des revendications 1 à 9,
caractérisé par le fait
que l'élément amortisseur est relié à l'élément d'appui par concordance de formes et/ou mécaniquement.

11. Dispositif selon l'une des revendications 1 à 10,
caractérisé par le fait
que l'élément d'appui (4, 16, 17) consiste en un matériau de section transversale ronde ou ovale.

12. Dispositif selon l'une des revendications 1 à 10,
caractérisé par le fait
que l'élément d'appui (9, 30, 31) consiste en un matériau de section transversale polygonale, notamment en un matériau aplati rectangulaire.

13. Dispositif selon l'une des revendications 1 à 12,
caractérisé par le fait
que l'élément d'appui (4, 9, 16, 17) est relié à la conduite flexible dans des régions extrêmes de segments flexibles de ladite conduite (1, 12, 13, 14, 15).

14. Dispositif selon la revendication 13,
caractérisé par le fait
qu'un ou plusieurs segments flexibles de la conduite (1, 12, 13, 14, 15), aux régions extrêmes desquels l'élément d'appui est relié, sont constitués d'un tuyau métallique ondulé (1), et ledit élément d'appui (4) est consigné à demeure dans les régions extrêmes dudit tuyau, entre au moins deux ondulations (7), par concordance de formes et/ou mécaniquement.

15. Dispositif selon la revendication 14,
caractérisé par le fait
que les deux ondulations (7) sont réalisées plus rigides que les ondulations restantes (3) du tuyau ondulé.

16. Dispositif selon l'une des revendications 1 à 15,
caractérisé par le fait
que l'élément d'appui est additionnellement accouplé à la conduite entre les régions extrêmes de cette dernière.

17. Dispositif selon l'une des revendications 1 à 16,
caractérisé par le fait
que l'élément d'appui (4, 9, 30, 31) ceinture la conduite flexible (1, 12, 27), au moins par zones avec espacement, selon un tracé spiroïdal et/ou hélicoïdal.

18. Dispositif selon l'une des revendications 1 à 17,
caractérisé par le fait
que l'élément amortisseur (6) présente un blindage (8) dirigé vers la conduite (1) guidant les gaz d'échappement.

19. Dispositif selon l'une des revendications 1 à 18,
caractérisé par le fait
qu'un tronçon de l'élément d'appui (23) est réalisé en forme de coquille et constitue, en association avec la conduite (24) destinée aux gaz d'échappement, une tubulure d'amont isolée par un vide interstitiel.

20. Dispositif selon l'une des revendications 1 à 19,
caractérisé par le fait
qu'un ou plusieurs segments flexibles de la conduite se présentent, respectivement, comme un tuyau ou un soufflet métallique à ondulations annulaires ou en forme de pas de vis, ou bien comme un tuyau métallique à enroulements serrés.
